# EUROPÄISCHE PATENTSCHRIFT

(11) **EP 3 511 197 B1**
(45) Veröffentlichungstag und Bekanntmachung des Hinweises auf die Patenterteilung: **14.10.2020**
(21) Anmeldenummer: 18020509.8
(22) Anmeldetag: 17.10.2018
(51) Int. Cl.: B60L 53/16, H01R 31/06, H01R 27/00, H01R 13/502, H01R 13/512

(54) **LANDSEITIGER ELEKTROFAHRZEUG-LADESTECKER**
AGRICULTURAL ELECTRIC VEHICLE CONNECTOR
CONNECTEUR DE RECHARGE DE VÉHICULE ÉLECTRIQUE CÔTÉ SOURCES TERRESTRES

(30) Priorität: 16.01.2018 DE 102018100824
(43) Veröffentlichungstag der Anmeldung: 17.07.2019
(73) Patentinhaber: Dr. Ing. h.c. F. Porsche AG, 70435 Stuttgart (DE)
(72) Erfinder: Götz, Stefan, 85659 Forstern (DE); Rönfanz, Jari, 75417 Mühlacker (DE); Reber, Volker, 74544 Michelbach an der Bilz (DE)

(56) Entgegenhaltungen:
- WO-A1-2015/084106
- DE-A1-102013 110 798
- DE-A1-102014 103 864
- DE-A1-102016 105 470
- KR-B1- 101 370 045
- US-A1- 2013 224 969

## Beschreibung

Die Erfindung bezieht sich auf einen landseitigen Elektrofahrzeug-Ladestecker, der zum Aufladen einer fahrzeugseitigen Traktionsbatterie in einen fahrzeugseitigen Ladestecker einsteckbar ist.

Der landseitige Elektrofahrzeug-Ladestecker ist Teil einer landseitigen Ladestation zum Aufladen einer Traktionsbatterie eines Elektrofahrzeugs. Im Gegensatz zum fahrzeugseitigen Ladestecker ist der landseitige Ladestecker einem hohen Verschleiß ausgesetzt, da er mehrere 100-mal bis zu mehreren 1000-mal pro Jahr benutzt wird, also angekoppelt und abgekoppelt wird. Neben dem reinen Verschleiß der elektrischen Kontakte wird der Ladestecker im Übrigen auch mechanisch beansprucht und gegebenenfalls mechanisch beschädigt, beispielsweise durch Herunterfallen und Aufschlagen auf den Boden.

Die landseitigen Ladestecker werden daher in regelmäßigen Abständen ausgetauscht. Dies kann beispielsweise dadurch erfolgen, dass das gesamte Ladekabel einschließlich des daran befestigten landseitigen Ladesteckers ausgetauscht wird. Hierzu muss jedoch die Ladesäule geöffnet werden und das neue Ladekabel mit seinem ladesäulenseitigen Ende an die Ladesäule angeschlossen werden.

Alternativ werden an dem landseitigen Ladestecker nur die elektrischen Kontakte ausgetauscht. Hierzu müssen die korrespondierenden Leitungskabel entsprechend gekürzt werden, um an den gekürzten Kabelenden die neuen elektrischen Kontakte befestigen zu können, beispielsweise durch Löten oder Crimpen. Dieses Verfahren ist umständlich und sehr anfällig für eine mangelhafte Umsetzung, da die Qualität des auf diese Weise überarbeiteten Ladesteckers sehr von der Sorgfalt des Monteurs abhängig ist.

Aus CN 105896212 A ist ein landseitiger Elektrofahrzeug-Ladestecker bekannt, der mit einem Adapterstecker auf eine andere Anschlussstecker-Norm umgerüstet werden kann. Der Adapterstecker weist mehrere fest in dem Adapterstecker verankerte Ladestrom-Kontaktstifte auf, die beim Aufstecken des Adaptersteckers auf die Steckerbasis mit den korrespondierenden Ladestrom-Basiskontakten zusammengesteckt werden. Die Qualität der elektrischen Verbindung zwischen dem adapterseitigen Ladestrom-Kontaktstift und dem Ladestrom-Basiskontakt kann beim Zusammenstecken nicht kontrolliert und beeinflusst werden. Unter ungünstigen Umständen können sich im Kontaktbereich zwischen den beiden Kontakten relativ hohe Übergangswiderstände ergeben, die bei Ladeströmen von typisch weit über 100 A zu einer kritischen Wärmeentwicklung führen können. Weiter Beispiele für austauschbare Stecker sind in den folgenden Patentveröffentlichungen offenbart: DE102016105470 A1(TE Connectivity) and WO2015/084106 A1 (Lee Jin-Kook).

Aufgabe der Erfindung ist es demgegenüber, einen landseitigen Elektrofahrzeug-Ladestecker mit vereinfachter Austauschbarkeit der Verschleißteile zu schaffen.

Diese Aufgabe wird erfindungsgemäß gelöst mit einem landseitigen Elektrofahrzeug-Ladestecker mit den Merkmalen des Anspruchs 1.

Der erfindungsgemäße landseitige Elektrofahrzeug-Ladestecker weist eine Steckerbasis und ein separates austauschbares Interface auf, das an der Steckerbasis befestigt ist, jedoch mit wenigen Handgriffen austauschbar ist. Die Steckerbasis weist einen elektrisch nicht-leitenden Basiskörper und mindestens einen Ladestrom-Basiskontakt auf, der fest in dem Basiskörper verankert ist. Der Ladestrom-Basiskontakt ist beispielsweise formschlüssig in dem Basiskörper vergossen.

Das Interface weist einen elektrisch nicht-leitenden Interfacekörper und mindestens einen mit dem Ladestrom- Basiskontakt korrespondierenden Ladestrom-Interfacekontakt auf. Der Ladestrom-Interfacekontakt ist nicht fest in dem Interfacekörper verankert, sondern sitzt in einer proximal zugänglichen Stecköffnung in dem Interfacekörper.

Unter einem Ladestrom-Kontakt ist generell ein elektrisch leitender Kontaktkörper zu verstehen, über den der Ladestrom fließt, durch den die Traktionsbatterie des Elektrofahrzeugs aufgeladen wird. Unter der proximalen Richtung ist vorliegend die der Ladesäule zugewandte Richtung zu verstehen, wohingegen unter der distalen Richtung die entgegengesetzte und dem fahrzeugseitigen Ladestecker zugewandte Richtung zu verstehen ist.

Der Ladestrom-Interfacekontakt ist also von der proximalen Seite des Interfacekörpers aus in die Stecköffnung einsteckbar. Hierdurch wird es ermöglicht, dass nach dem Entfernen des verschlissenen Interfaces zunächst der neue unverschlissene Ladestrom-Interfacekontakt kontrolliert an dem Ladestrom-Basiskontakt befestigt wird, und erst anschließend der neue unverschlissene Interfacekörper derart auf den Basiskörper axial aufgeschoben wird, dass der Ladestrom-Interfacekontakt dabei axial in die Stecköffnung eingeschoben wird. Die elektrische Kontaktierung des Ladestrom-Interfacekontakts mit dem Ladestrom-Basiskontakt erfolgt also vorgelagert und kontrolliert und kann gegebenenfalls bearbeitet und nachbearbeitet werden, bis die elektrische Kontaktierung von ausreichender Qualität ist. Erst danach wird der nicht-leitende Interfacekörper auf den Basiskörper aufgesetzt, so dass die elektrische Kontaktierung dann nicht mehr zugänglich ist.

Auf diese Weise ist ein landseitiger Elektrofahrzeug- Ladestecker geschaffen, dessen Verschleißteile, nämlich insbesondere der Interfacekörper und der bzw. die Ladestrom-Interfacekontakte auf einfache Weise mit relativ wenig Aufwand und hoher Kontaktqualität ausgetauscht werden können.

Gemäß einer bevorzugten Ausgestaltung weist die Steckerbasis des Ladesteckers mindestens einen Signal-Basiskontakt auf, der fest in dem Basiskörper verankert ist, wobei das Interface mindestens einen hiermit korrespondierenden Signal-Interfacekontakt aufweist, der fest in dem Interfacekörper verankert ist. Der Signal-Interfacekontakt wird also ebenfalls ausgetauscht, ist allerdings fest verankert in dem Interfacekörper fixiert, so dass die Kontaktierung mit dem korrespondierenden Signal-Basiskontakt erst beim Aufstecken des Interfaces auf die Steckerbasis erfolgt.

Unter einem Signal-Kontakt ist vorliegend ein Kontakt zu verstehen, durch den ausschließlich elektrische Signale zwischen dem Elektrofahrzeug und der Ladestation übertragen werden, über den aber nicht die Traktionsbatterie aufgeladen wird.

Vorzugsweise weist der Ladestrom-Basiskontakt eine größere Härte auf als der Ladestrom-Interfacekontakt. Unter Härte ist vorliegend die mechanische Härte des betreffenden Werkstoffs zu verstehen, also die plastische Verformbarkeit. Durch die geringere mechanische Härte des Ladestrom-Interfacekontakts wird sichergestellt, dass der Ladestrom-Basiskontakt auch nach mehrfachem Austausch verschlissener Ladestrom-Interfacekontakte nicht nennenswert deformiert bzw. verschlissen ist. Die Deformation des Ladestrom-Basiskontakts wird sowohl beim Fixieren als auch beim Entfernen des korrespondierenden Ladestrom-Interfacekontakts minimiert, so dass auch ein vielfacher Austausch des Ladestrom-Interfacekontakts nicht zu einer funktionseinschränkenden Deformation des Ladestrom- Ladekontakts führt.

Gemäß einer bevorzugten Ausgestaltung weist der Ladestrom-Interfacekontakt an seinem proximalen Ende einen plastisch verformten Montagekopf auf, der in einer korrespondierenden Montageöffnung an dem distalen Ende des Ladestrom-Basiskontakts sitzt. Der Montagekopf des Interfacekontakts kann beispielsweise bei der Montage in die Montageöffnung des korrespondierenden Ladestrom-Basiskontakts eingeschlagen werden, so dass sich eine großflächige Kontaktfläche zwischen dem Ladestrom-Interfacekontakt mit dem Ladestrom-Basiskontakt ergibt. Hierdurch wird dauerhaft ein niedriger Übergangswiderstand in diesem Bereich sichergestellt. Beim Entfernen des verschlissenen Ladestrom-Interfacekontakts wird dieser mit seinem Montagekopf aus der Montageöffnung herausgezogen, wobei sich der Montagekopf gegebenenfalls erneut plastisch verformt, um aus der Montageöffnung herausgezogen werden zu können.

Gemäß einer bevorzugten Ausgestaltung weist der Ladestrom-Interfacekontakt an seinem proximalen Ende einen Montagekopf auf, der in einer korrespondierenden Montageöffnung an dem distalen Ende des Ladestrom-Basiskontakts sitzt. Die Montageöffnung wird von einer Schlitzhülse gebildet. Unter einer Schlitzhülse ist vorliegend eine im Wesentlichen in Längsrichtung geschlitzte Hülse zu verstehen, die mehrere durch die Hülsenschlitze voneinander getrennte Hülsenarme aufweist, die gemäß einer bevorzugten Ausgestaltung in radialer Richtung elastisch verbiegbar sind. Beim Einstecken des Montagekopfs verformt sich die Schlitzhülse elastisch, so dass der hinterschnittene Montagekopf die Montageöffnung passieren kann. Dennoch wird durch die radiale Vorspannung der Hülsenarme sichergestellt, dass nach dem Einstecken des Montagekopfs ein großflächiger und fester Kontakt hergestellt ist, der dauerhaft einen niedrigen Übergangswiderstand sicherstellt.

Vorzugsweise ist die Stecköffnung, in die der korrespondierende Ladestrom-Interfacekontakt eingesteckt ist, leicht konisch ausgebildet. Die Stecköffnung weist also am Öffnungsboden einen geringeren Durchmesser auf, als am Öffnungsrand. Auf diese Weise wird insbesondere das Einfädeln des Ladestrom-Interfacekontakts in die Stecköffnung bei der Montage des neuen Interfacekörpers erleichtert. Unter einer leichten Konizität wird vorliegend ein Konuswinkel von weniger als 15° verstanden.

Besonders bevorzugt ist die Stecköffnung in Bezug auf den Ladestrom-Interfacekontakt hinterschneidungsfrei ausgebildet, so dass der Ladestrom-Interfacekontakt zerstörungsfrei die Stecköffnung wieder verlassen kann, wenn beispielsweise der verschlissene Interfacekörper von dem Basiskörper entfernt wird.

Gemäß einer bevorzugten Ausgestaltung der Erfindung ist vorgesehen, dass der Ladestrom-Interfacekontakt in der Stecköffnung ein Radialspiel von mehr als 0,2 mm aufweist, besonders bevorzugt von mehr als 0,3 und maximal bis zu 5,0 mm in Schritten von 0,1 mm aufweist. Der Ladestrom-Basiskontakt ist besonders bevorzugt völlig spielfrei in dem Basiskörper verankert. Durch das Radialspiel des Interfacekontakts in der Stecköffnung werden beim Verbinden des landseitigen Ladesteckers mit dem korrespondierenden fahrzeugseitigen Ladestecker entsprechende Ungenauigkeiten beim Zusammenstecken ausgeglichen, so dass die beiden Ladestecker verspannungsfrei miteinander elektrisch verbunden werden können. Hierdurch wird insbesondere der mechanische Verschleiß der Ladestrom-Kontakte der beiden Ladestecker verringert.

Vorzugsweise ist in dem ringförmigen Zwischenraum zwischen dem Ladestrom-Interfacekontakt und der Stecköffnungsinnenwand ein bevorzugt elastischer Positionierring angeordnet, der den Ladestrom-Interfacekontakt ungefähr mittig in der Stecköffnung positioniert. Der Positionierring kann dabei eine radiale Stärke aufweisen, die den ringförmigen Zwischenraum radial vollständig ausfüllt, so dass der Ladestrom-Interfacekontakt im nicht-entlasteten Zustand stets exakt dieselbe Mittelposition einnimmt.

Vorzugsweise ist ein Sicherungselement vorgesehen, wobei das Interface an der Steckerbasis durch das Sicherungselement derart fixiert ist, dass es nur mit einem Werkzeug geöffnet werden kann. Das Werkzeug kann ein Spezialwerkzeug sein, so dass ein unbefugtes Entfernen des Sicherungselements erschwert ist oder unmöglich gemacht wird. Ein derartiges Sicherungselement kann beispielsweise ein Schloss sein, das nur mit einem entsprechenden Schlüssel zu öffnen ist.

Im Folgenden wird ein Ausführungsbeispiel der Erfindung anhand der Zeichnungen näher erläutert. Es zeigen:
Figur 1 einen Längsschnitt durch einen landseitigen Elektrofahrzeug-Ladestecker mit einer Steckerbasis und einem montierten Interface, und

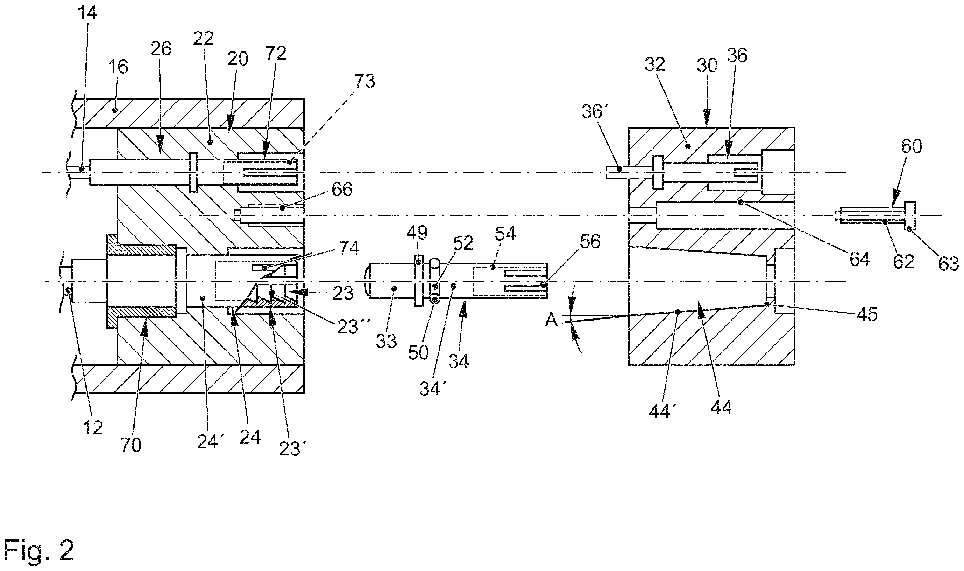

Figur 2 die Steckerbasis und das separate und demontierte Interface des Elektrofahrzeug-Ladesteckers der Figur 1.

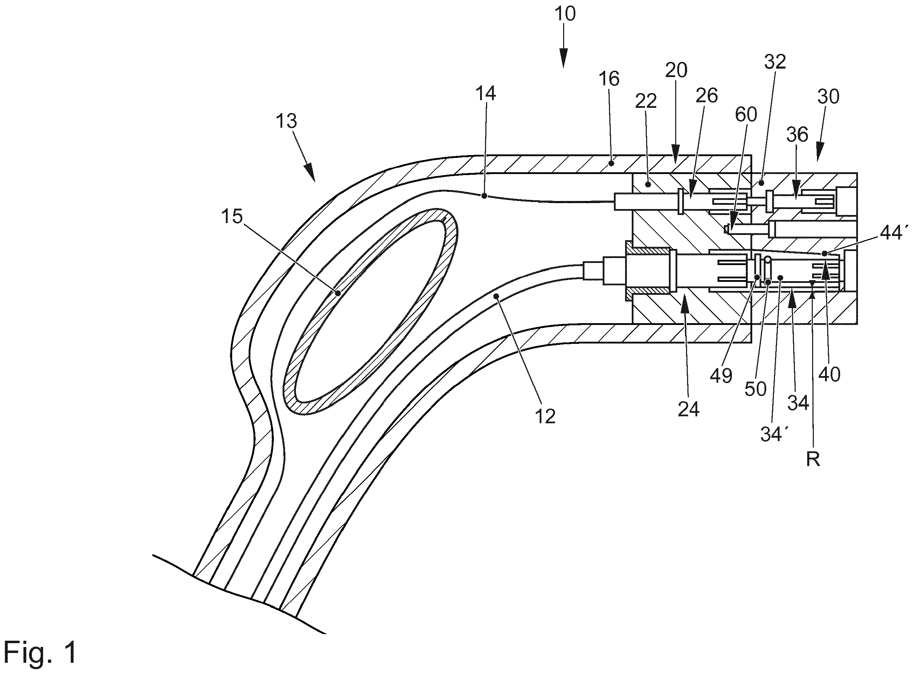

In der Figur 1 ist ein landseitiger Elektrofahrzeug-Ladestecker 10 dargestellt, der zum Einstecken in einen korrespondierenden fahrzeugseitigen Ladestecker (nicht dargestellt) geeignet ist, um eine Traktionsbatterie eines Elektrofahrzeugs aufzuladen. Der Ladestecker 10 weist einen Griffteil 13 auf, der von einem Griffteil-Gehäuse 16 gebildet ist und eine Grifföffnung 15 definiert, die von der Hand eines Bedieners ergriffen werden kann.

Am distalen Ende des Griffteil-Gehäuses 16 ist eine Steckerbasis 20 fest verankert. Die Steckerbasis 20 wird von einem elektrisch nicht-leitenden Kunststoff-Basiskörper 22 und zwei in dem Basiskörper 22 fest verankerten Ladestrom-Basiskontakten 24 und mehreren Signal-Basiskontakten 26 gebildet. Dargestellt ist in den Figuren jeweils ein einziger Basiskontakt 24,26. Die Basiskontakte 24,26 sind derart fest in dem Basiskörper 22 verankert, dass sie nicht ohne Beschädigung bzw. ohne Zerstörung des Basiskörpers 22 aus dem Basiskörper 22 entfernt werden können. Während die Signal-Basiskontakte 26 formschlüssig und unverlierbar in den Basiskörper 22 vergossen sind, sind die beiden Ladestrom-Basiskontakte 24 jeweils über eine entsprechende Klemmhülse 70, die beispielsweise mit dem Basiskörper 22 verklebt sein kann, unverlierbar mit dem Basiskörper 22 verbunden.

Die Steckerbasis 20 verbleibt über die gesamte Lebensdauer des Ladesteckers 10 an dem Griffteil-Gehäuse 16, ohne ausgetauscht zu werden. Die Ladestrom-Basiskontakte 24 sind über eine elektrische Ladeleitung 12 mit einer landseitigen Ladesäule (nicht dargestellt) elektrisch verbunden. Die Signal-Basiskontakte 26 sind jeweils über eine entsprechende Signalleitung 14 mit der landseitigen Ladesäule verbunden. Über die Ladeleitungen 12 werden Ladeströme von mehreren 100 A übertragen. Über die Signalleitungen 14 werden ausschließlich elektrische Signale übertragen.

An der Steckerbasis 20 ist ein separates entfernbares bzw. austauschbares Interface 30 befestigt, das einem relativ hohen mechanischen Verschleiß ausgesetzt ist. Das Interface 30 kann mit relativ wenig Aufwand bei Bedarf, beispielsweise im Rahmen einer regelmäßigen Wartung, ausgetauscht werden. Das Interface 30 weist einen elektrisch nicht-leitenden Kunststoff-Interfacekörper 32 auf, in dem zwei Ladestrom-Interfacekontakte 34 gelagert sind sowie mehrere Signal-Interfacekontakte 36 fest verankert sind. Alle Kontakte 24,26, 34,36 sind elektrisch leitend und bestehen jeweils aus einem hierfür geeigneten Metall. Die beiden Ladestrom-Kontakte 24,34 bestehen jeweils aus einem Metall-Kontaktkörper 24',34', wobei der Kontaktkörper 24' des Ladestrom-Basiskontakts 24 mechanisch härter ist als der Kontaktkörper 34' des Ladestrom-Interfacekontakts 34.

Das Interface 30 bzw. der Interfacekörper 32 ist mit einem Sicherungselement 60 an der Steckerbasis 20 bzw. dem Basiskörper 22 fixiert. Das Sicherungselement 60 ist vorliegend eine Kopf-Gewindeschraube, die in einer gestuften Bohrung 64 des Interfacekörpers 32 tief versenkt eingesteckt ist, und die mit ihrem Gewindeschaft 62 in einer korrespondierenden Gewindebohrung 66 des Basiskörpers 22 eingeschraubt ist. Das Sicherungselement 60 weist einen Schraubenkopf 63 auf, der mit einem entsprechenden Spezialwerkzeug formschlüssig kontaktiert werden kann, so dass das Sicherungselement 60 nur mit dem Spezialwerkzeug ein- bzw. ausgeschraubt werden kann.

Im zusammengebauten Zustand, der in der Figur 1 dargestellt ist, steckt ein Kontaktkopf 36' des Signal-Interfacekontakts 36 in einer korrespondierenden Kontaktbohrung 73 an dem distalen Ende 72 des Signal-Basiskontakts 26.

Der Ladestrom-Interfacekontakt 34 ist im Wesentlichen zylindrisch ausgebildet und weist an seinem distalen Längsende eine durch eine Sackbohrung 54 definierte Öffnung auf, in die ein korrespondierender Kontaktstift des fahrzeugseitigen Ladesteckers einsteckbar ist. Der Ladestrom-Interfacekontakt 34 weist an seinem proximalen Ende einen plastisch verformbaren bzw. verformten Montagekopf 33 auf, der im montierten Zustand in einer korrespondierenden Montageöffnung 23 an dem distalen Ende des Ladestrom-Basiskontakts 24 sitzt. An den Montagekopf 33 grenzt in distaler Richtung ein Begrenzungsring 49 an, durch den die radiale Beweglichkeit des Ladestrom-Interfacekontakts 34 innerhalb der Stecköffnung 44 des Interfacekörpers 32 begrenzt ist. An den Begrenzungsring 49 schließt sich eine zirkuläre Ringnut 52 an, in der ein elastischer Positionierring 50 sitzt, durch den der Ladestrom-Interfacekontakt 34 innerhalb der Stecköffnung 44 zentriert wird, wenn der fahrzeugseitige Ladestecker nicht appliziert ist. Der Ladestrom-Interfacekontakt 34 weist innerhalb der Stecköffnung 44 ein Radialspiel R von ca. 0,5 mm auf, so dass der Ringspalt 48 zwischen dem Ladestrom-Interfacekontakt 34 und der Innenwand 44' der Stecköffnung 44 überall mindestens 0,5 mm beträgt.

Das distale Ende des Ladestrom-Basiskontakts 24 ist als Schlitzhülse 23' mit mehreren in axialer Richtung verlaufenden Hülsenschlitzen 74 ausgebildet. Innerhalb der Montageöffnung 23 sind mehrere im Querschnitt sägezahnartig ausgebildete Rastringe 23" vorgesehen. Beim Einstecken des Montagekopfs 33 in die korrespondierende Montageöffnung 23 wird der Montagekopf 33 plastisch verformt, so dass er großflächig an den korrespondierenden Oberflächen innerhalb der Montageöffnung 23 anliegt, wodurch wiederum dauerhaft ein sehr geringer Übergangswiderstand realisiert wird.

Im zusammengebauten Zustand sitzt der Ladestrom-Interfacekontakt 34 in einer proximal zugänglichen Stecköffnung 44 des Interfacekörpers 32, die leicht konisch ausgebildet ist, wobei sich ihr Durchmesser in proximaler Richtung vergrößert. Der Konuswinkel A zwischen der axialen und der geneigten Innenwand 44' der Stecköffnung 44 beträgt beispielsweise 5°. Durch die leichte Konizität der Stecköffnung 44 wird das Einfädeln des Ladestrom-Interfacekontakts in die Stecköffnung 44 erleichtert.

Am distalen Längsende der Stecköffnung 44 ist ein Ringabsatz 45 vorgesehen, dessen Innendurchmesser kleiner ist als der Außendurchmesser des im Wesentlichen zylindrisch ausgebildeten Ladestrom-Interfacekontakts 34. Der Ringabsatz 45 stützt den Ladestrom-Interfacekontakt 34 im montierten Zustand axial derart ab, dass eine Bewegung des Ladestrom-Interfacekontakts 34 in proximaler Richtung nicht möglich ist, beispielsweise beim Abziehen des fahrzeugseitigen Ladesteckers.

Bei der Montage eines neuen nicht-verschlissenen Interfaces 30 an der Steckerbasis 20 wird zunächst der Ladestrom-Interfacekontakt 34 mit seinem Montagekopf 33 in die Montageöffnung 23 eingesteckt bzw. mit einem entsprechenden Werkzeug eingeschlagen. Hierbei verformt sich der Montagekopf 33 plastisch, so dass er fest und großflächig in der Montageöffnung 23 Kontakt erhält. Anschließend wird der Interfacekörper 32 einschließlich des darin fest verankerten Signal-Interfacekontakts 36 axial auf den Basiskörper 22 aufgesetzt, wobei der Kontaktkopf 36' des Signal-Interfacekontakts 36 in die Kontaktbohrung 73 eingesteckt wird und elektrisch kontaktiert wird. Schließlich wird das Sicherungselement 60 mit einem Spezialwerkzeug appliziert, so dass das Interface 30 schließlich fest an der Steckerbasis 20 fixiert ist.

## Patentansprüche

1. Landseitiger Elektrofahrzeug-Ladestecker (10) mit einer Steckerbasis (20) und einem separaten Interface (30), das an der Steckerbasis (20) befestigt ist, wobei
die Steckerbasis (20) einen elektrisch nicht-leitenden Basiskörper (22) und mindestens einen Ladestrom-Basiskontakt (24) aufweist, der fest in dem Basiskörper (22) verankert ist, und
das Interface (30) einen elektrisch nicht-leitenden Interfacekörper (32) und mindestens einen korrespondierenden Ladestrom-Interfacekontakt (34) aufweist, der in einer proximal zugänglichen Stecköffnung (44) in dem Interfacekörper (32) sitzt,
**dadurch gekennzeichnet, dass**
das Interface (30) an der Steckerbasis (20) durch ein Sicherungselement (60) fixiert ist, das werkzeuglos nicht geöffnet werden kann und einen Schraubenkopf (63) aufweist, der mit einem entsprechenden Spezialwerkzeug formschlüssig kontaktiert werden kann.

2. Landseitiger Elektrofahrzeug-Ladestecker (10) nach Anspruch 1, wobei die Steckerbasis (20) mindestens einen Signal-Basiskontakt (26) aufweist, der fest in dem Basiskörper (22) verankert ist, und das Interface (30) mindestens einen korrespondierenden Signal-Interfacekontakt (36) aufweist, der fest in dem Interfacekörper (32) verankert ist.

3. Landseitiger Elektrofahrzeug-Ladestecker (10) nach einem der vorangegangenen Ansprüche, wobei der Ladestrom-Basiskontakt (24) eine größere Härte aufweist als der Ladestrom-Interfacekontakt (34).

4. Landseitiger Elektrofahrzeug-Ladestecker (10) nach einem der vorangegangenen Ansprüche, wobei der Ladestrom-Interfacekontakt (34) an seinem proximalen Ende einen plastisch verformten Montagekopf (33) aufweist, der in einer korrespondierenden Montageöffnung (23) an dem distalen Ende des Ladestrom-Basiskontakts (24) sitzt.

5. Landseitiger Elektrofahrzeug-Ladestecker (10) nach einem der vorangegangenen Ansprüche, wobei der Ladestrom-Interfacekontakt (34) an seinem proximalen Ende einen Montagekopf (33) aufweist, der in einer korrespondierenden Montageöffnung (23) an dem distalen Ende des Ladestrom-Basiskontakts (24) sitzt, wobei die Montageöffnung (23) von einer Schlitzhülse (23') gebildet wird.

6. Landseitiger Elektrofahrzeug-Ladestecker (10) nach einem der vorangegangenen Ansprüche, wobei die Stecköffnung (44) leicht konisch ausgebildet ist.

7. Landseitiger Elektrofahrzeug-Ladestecker (10) nach einem der vorangegangenen Ansprüche, wobei die Stecköffnung (44) in Bezug auf den Ladestrom-Interfacekontakt (34) hinterschneidungsfrei ausgebildet ist.

8. Landseitiger Elektrofahrzeug-Ladestecker (10) nach einem der vorangegangenen Ansprüche, wobei der Ladestrom-Interfacekontakt (34) in der Stecköffnung (44) ein Radialspiel (R) von mehr als 0,2 mm aufweist, besonders bevorzugt von 0,3 mm bis 5,0 mm.

9. Landseitiger Elektrofahrzeug-Ladestecker (10) nach Anspruch 8, wobei in dem ringförmigen Zwischenraum (48) zwischen dem Ladestrom-Interfacekontakt (34) und der Stecköffnungs- Innenwand (44') ein elastischer Positionierring (50) angeordnet ist.

## Claims

1. Land-based electric vehicle charging plug (10) having a plug base (20) and a separate interface (30), which is secured to the plug base (20), wherein
the plug base (20) has an electrically non-conductive base body (22) and at least one charging current base contact (24), which is fixedly anchored in the base body (22), and the interface (30) has an electrically non-conductive interface body (32) and at least one corresponding charging current interface contact (34), which sits in a proximally accessible plug opening (44) in the interface body (32),
**characterized in that**
the interface (30) is fixed to the plug base (20) by a securing element (60), which cannot be opened without tools and has a screw head (63), which can be contact-connected in a form-fitting manner to a corresponding special tool.

2. Land-based electric vehicle charging plug (10) according to Claim 1, wherein the plug base (20) has at least one signal base contact (26), which is fixedly anchored in the base body (22), and the interface (30) has at least one corresponding signal interface contact (36), which is fixedly anchored in the interface body (32).

3. Land-based electric vehicle charging plug (10) according to either of the preceding claims, wherein the charging current base contact (24) has a greater hardness than the charging current interface contact (34).

4. Land-based electric vehicle charging plug (10) according to one of the preceding claims, wherein the charging current interface contact (34) has a plastically deformed mounting head (33) at the proximal end thereof, which mounting head sits in a corresponding mounting opening (23) at the distal end of the charging current base contact (24).

5. Land-based electric vehicle charging plug (10) according to one of the preceding claims, wherein the charging current interface contact (34) has a mounting head (33) at the proximal end thereof, which mounting head sits in a corresponding mounting opening (23) at the distal end of the charging current base contact (24), wherein the mounting opening (23) is formed by a slit sleeve (23').

6. Land-based electric vehicle charging plug (10) according to one of the preceding claims, wherein the plug opening (44) is designed in a slightly conical manner.

7. Land-based electric vehicle charging plug (10) according to one of the preceding claims, wherein the plug opening (44) is designed to be free of undercuts with respect to the charging current interface contact (34) .

8. Land-based electric vehicle charging plug (10) according to one of the preceding claims, wherein the charging current interface contact (34) has in the plug opening (44) a radial play (R) of more than 0.2 mm, particularly preferably of from 0.3 mm to 5.0 mm.

9. Land-based electric vehicle charging plug (10) according to Claim 8, wherein an elastic positioning ring (50) is arranged in the annular intermediate space (48) between the charging current interface contact (34) and the plug opening inner wall (44').

## Revendications

1. Connecteur de recharge de véhicule électrique côté sources terrestres (10) comportant une base de connecteur (20) et une interface séparée (30) fixée à la base de connecteur (20), dans lequel
la base de connecteur (20) comporte un corps de base (22) non électroconducteur et au moins un contact de base de courant de charge (24) qui est fermement ancré dans le corps de base (22), et
l'interface (30) comporte un corps d'interface (32) non électroconducteur et au moins un contact d'interface de courant de charge (34) correspondant, qui est logé dans une ouverture d'enfichage (44) accessible de manière proximale dans le corps d'interface (32),
**caractérisé en ce que**
l'interface (30) est fixée à la base de connecteur (20) par un élément de sécurité (60) qui ne peut pas être ouvert sans outil et possède une tête de vis (63) pouvant être mise en contact par complémentarité de forme au moyen d'un outil spécial correspondant.

2. Connecteur de recharge de véhicule électrique côté sources terrestres (10) selon la revendication 1, dans lequel la base de connecteur (20) comporte au moins un contact de base de signal (26) qui est fermement ancré dans le corps de base (22), et l'interface (30) comporte au moins un contact d'interface de signal correspondant (36) qui est fermement ancré dans le corps d'interface (32) .

3. Connecteur de recharge de véhicule électrique côté sources terrestres (10) selon l'une des revendications précédentes, dans lequel le contact de base de courant de charge (24) présente une dureté supérieure à celle du contact d'interface de courant de charge (34).

4. Connecteur de recharge de véhicule électrique côté sources terrestres (10) selon l'une des revendications précédentes, dans lequel le contact d'interface de courant de charge (34) présente à son extrémité proximale une tête de montage (33) déformée plastiquement, qui est logée dans une ouverture de montage (23) correspondante à l'extrémité distale du contact de base de courant de charge (24).

5. Connecteur de recharge de véhicule électrique côté sources terrestres (10) selon l'une des revendications précédentes, dans lequel le contact d'interface de courant de charge (34) comporte à son extrémité proximale une tête de montage (33) qui est logée dans une ouverture de montage (23) correspondante à l'extrémité distale du contact de base de courant de charge (24), dans lequel l'ouverture de montage (23) est formée par un manchon fendu (23').

6. Connecteur de recharge de véhicule électrique côté sources terrestres (10) selon l'une des revendications précédentes, dans lequel l'ouverture d'enfichage (44) est légèrement conique.

7. Connecteur de recharge de véhicule électrique côté sources terrestres (10) selon l'une des revendications précédentes, dans lequel l'ouverture d'enfichage (44) est réalisée sans contre-dépouille par rapport au contact d'interface de courant de "charge (34).

8. Connecteur de recharge de véhicule électrique côté sources terrestres (10) selon l'une des revendications précédentes, dans lequel le contact d'interface de courant de charge (34) présente, dans l'ouverture d'enfichage (44), un jeu radial (R) de plus de 0,2 mm, de préférence de 0,3 mm à 5,0 mm.

9. Connecteur de recharge de véhicule électrique côté sources terrestres (10) selon la revendication 8, dans lequel une bague de positionnement élastique (50) est disposée dans l'espace intermédiaire annulaire (48) entre le contact d'interface de courant de charge (34) et la paroi intérieure (44') de l'ouverture d'enfichage.
